# NOUVEAU FASCICULE DE BREVET EUROPEEN

(11) **EP 0 980 561 B2**
(45) Date de publication et mention de la décision concernant l'opposition: **09.03.2011**
(45) Mention de la délivrance du brevet: 07.06.2006
(21) Numéro de dépôt: 96922071.4
(22) Date de dépôt: 07.06.1996
(51) Int. Cl.: G06K 7/06

(54) **CARTE AMOVIBLE A CONNECTEUR ENFICHABLE, FORMANT LECTEUR DE CARTE A PUCE POUR MICRO-ORDINATEUR**
ENTFERNBARE KARTE MIT EINER STECKVERBINDUNG ALS SMARTKARTENLESER FÜR EINEN MIKROCOMPUTER
REMOVABLE CARD WITH A PLUG-IN CONNECTOR FORMING A SMART CARD READER FOR A MICROCOMPUTER

(30) Priorité: 08.06.1995 FR 9506723
(43) Date de publication de la demande: 23.02.2000
(73) Titulaire: Gemalto SA, 92190 Meudon (FR)
(72) Inventeur: MONNOT, Jérôme, F-13420 Gémenos (FR)
(86) Numéro de dépôt international: PCT/FR1996/000858
(87) Numéro de publication internationale: WO 1996/042063

(56) Documents cités:
- EP-A- 0 282 954
- EP-A- 0 552 078
- EP-A- 0 724 226
- EP-A- 0 735 507
- WO-A-90/16046
- DE-A- 4 310 517
- DE-U- 29 505 678

## Description

L'invention concerne les cartes amovibles enfichables destinées à être insérées temporairement dans un micro-ordinateur (ou ordinateur personnel, ou PC, de l'anglais "personal computer").

Ces cartes sont plus généralement connues sous l'appellation cartes PCMCIA. Elles comportent plusieurs puces de circuits intégrés et un connecteur à grand nombre de broches, pour une communication de type parallèle avec le micro-ordinateur. Dans la norme PCMCIA définie par l'association du même nom ("Personal Computer Memory Card International Association", 1030B East Duane Avenue, Sunnyvale, California), le connecteur est un connecteur femelle de 68 broches, enfichable dans un connecteur mâle correspondant du micro-ordinateur. Ces cartes sont principalement des cartes à mémoire de masse qui pourraient à l'avenir remplacer les disquettes et autres moyens de stockage de masse de type magnétique. Elles ont des capacités de stockage équivalentes et sont beaucoup plus rapides d'accès que les mémoires magnétiques. Elles peuvent servir aussi d'extension de mémoire vive du micro-ordinateur.

On a déjà proposé de modifier ces cartes PCMCIA pour les transformer en lecteurs de cartes à puces à contacts affleurants telles que les cartes de crédit ou les cartes d'accès de format maintenant très courant dans le grand public. Ainsi, un micro-ordinateur équipé d'une fente de réception de carte PCMCIA peut recevoir une carte PCMCIA, transformée pour pouvoir recevoir une carte à puce; l'ordinateur peut donc utiliser une carte à puce à contacts affleurants même s'il n'est pas équipé d'une fente de lecture de telles cartes à puces. La carte à puce est couplée à la carte PCMCIA et reliée électriquement à celle-ci; les deux cartes sont introduites dans le micro-ordinateur et les échanges entre la carte à puce et le micro-ordinateur ne se font que par l'intermédiaire du connecteur enfichable de la carte PCMCIA et du connecteur correspondant du micro-ordinateur.

Ceci permet par exemple
- de faire communiquer l'ordinateur avec une carte à puce à contacts affleurants même s'il n'est pas équipé de lecteur de cartes à contacts effleurants,
- de protéger l'accès à l'ordinateur par une carte à puce de sécurité,
- de protéger l'accès à la carte PCMCIA par une carte à puce de sécurité.

Un tel système est décrit dans la demande de brevet français n° 92 00323 déposée par la demanderesse et publiée sous le n° 2 686 171.

Mais les systèmes mécaniques prévus actuellement pour effectuer l'insertion conjointe d'une carte à puce à contacts affleurants et d'une carte PCMCIA dans un ordinateur équipé d'une fente PCMCIA ne donnent pas satisfaction en ce qui concerne à la fois la facilité d'insertion de la carte à puce et le maintien de celle-ci dans la carte PCMCIA. Les systèmes existants sont soit trop complexes soit insuffisamment fiables.

On connaît en effet d'une demande de brevet allemand DE 4 310 517 (celle ci ayant servi de base à la forme en deux parties de la revendication 1), un système, selon lequel le dispositif de lecture comporte une partie externe à la fente du lecteur de l'ordinateur. Cette partie se trouve dans le prolongement du lecteur de la carte à puce. Sa hauteur et sa largeur sont supérieures à celles de la fente de l'ordinateur de sorte que lorsque le lecteur est inséré dans la fente de l'ordinateur, cette partie reste à l'extérieur devant la fente. Cette partie extérieure rend le système encombrant, peu pratique et fragile.

En outre, on connaît de EP 0 696 010 B1 une carte amovible selon le préambule de la revendication 1 pour les états contractants ES et IT. De plus, EP 0 735 507 A2 divulgue une carte selon le même préambule, et représente un document au sens de l'article 54(3) CBE pour IT.

La demande de brevet EP-A-0724226 décrit un lecteur de carte à puce amovible au format des cartes PCMCIA. celui-ci comporte une première plaque portant un connecteur de carte à puce et une deuxième carte rigide de même longeur pour protéger la carte à puce et assurer un contact du connecteur avec celui de la carte du coté du connecteur et forment une fente d'insertion de la carte à puce du coté opposé. Cette demande fait partie de l'état de la technique au sens de l'article 54(3) CBE pour GB et DE.

La présente invention permet de remédier à ces inconvénients.

Ainsi, l'invention a pour but de proposer un système amélioré permettant à une carte à mémoire de type PCMCIA de servir de lecteur de carte à puce pour un micro-ordinateur comportant une fente de réception de carte PCMCIA. L'invention et définie dans la revendication 1 pour les états contractants ES et IT et dans la revendication independante 1 pour les états contractants DE et GB. Des modes particuliers de réalisation sont définis dans les revendications dépendantes correspondantes.

D'autres caractéristiques et avantages de l'invention apparaîtront à la lecture de la description détaillée qui suit et qui est faite en référence aux dessins annexés dans lesquels :
- la figure 1 représente une vue générale en perspective d'une carte PCMCIA selon l'invention;
- la figure 2 et la figure 3 représentent des vues en coupe de deux modes de réalisation;
- la figure 4 représente une vue de dessous d'une réalisation, avec une carte à puce insérée;
- la figure 5 représente une vue en perspective de dessous;

La carte amovible à connecteur enfichable est désignée par la référence générale 10. Elle peut être insérée dans une fente 12, aux normes PCMCIA, d'un micro-ordinateur 14. En principe, la carte enfichable 10 comporte un connecteur externe femelle de 68 broches qui peut pénétrer au fond de la fente 12, et le fond de la fente 12 est équipé d'un connecteur mâle correspondant de 68 broches. Ce connecteur mâle est un port d'entrée sortie parallèle pour le micro-ordinateur et la communication entre la carte et le micro-ordinateur est une communication de type parallèle.

La carte 10 comporte une ou plusieurs puces de circuit intégré noyées dans la matière plastique constituant le corps de la carte, ainsi que des connexions entre ces puces, et des connexions des puces aux différentes broches du connecteur externe enfichable. Les puces peuvent être des puces de mémoire ROM ou EPROM ou EEPROM, par exemple, dans le cas où la carte constitue une mémoire de masse pour le micro-ordinateur; elles peuvent être puces de mémoire vive RAM si la carte constitue une extension de mémoire vive pour le micro-ordinateur. Mais la carte peut avoir d'autres fonctions et comprendre par exemple un microprocesseur, etc.

Du côté opposé au connecteur externe de la carte 10, c'est-à-dire du côté opposé à celui qui est inséré dans la fente 12, on trouve sur la carte une fente 20 de réception d'une carte à puce à contacts affleurants 22. La carte à puce 22 est représentée hors de cette fente.

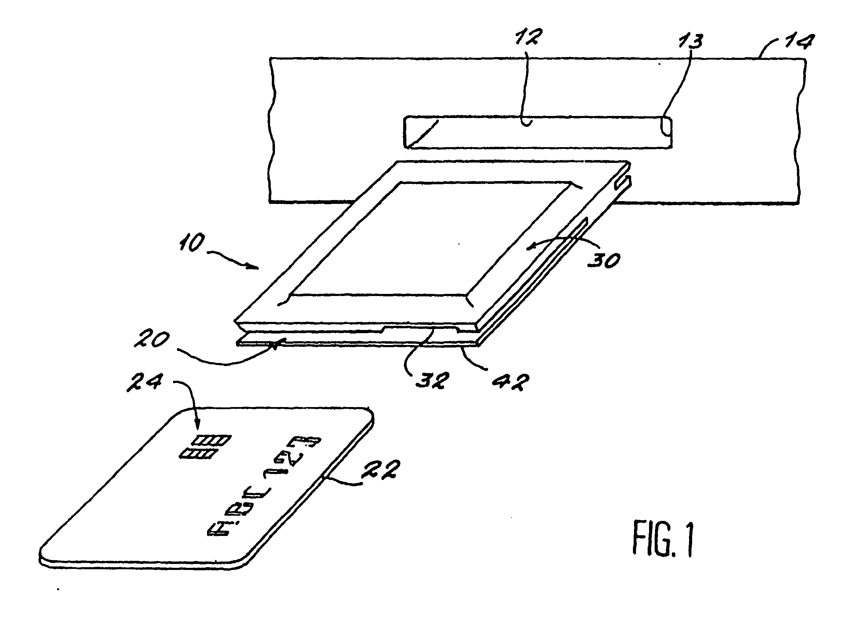

A l'intérieur de la fente 20, la carte enfichable 10 possède un connecteur interne (non visible sur la figure 1), apte à venir en contact avec les contacts affleurants 24 de la carte à puce 22 (en général 6 à 8 contacts affleurants). Le connecteur interne de la carte amovible est relié soit directement aux puces de cette carte, soit au connecteur externe enfichable de cette carte, soit à la fois aux puces et au connecteur externe, selon les applications.

La carte à puce 22 peut avoir une fonction de sécurité d'accès, soit pour contrôler et autoriser l'utilisation du micro-ordinateur, soit pour contrôler l'accès aux mémoires de la carte enfichable 10, notamment dans le cas où celle-ci sert de mémoire de masse et contient des données confidentielles ou des programmes pour le micro-ordinateur.

Le lecteur de carte à puce est formé par une carte amovible enfichable pour micro-ordinateur, laquelle comporte deux plaques en regard, sensiblement de même longueur, solidaires dans la partie située du côté du connecteur enfichable et formant une fente d'insertion de carte à puce du côté opposé.

Ainsi, pour assurer à la fois une introduction facile de la carte à puce 22 dans la fente 20 et un maintien des contacts affleurants 24 contre le connecteur interne de la carte enfichable, on prévoit que le corps de la carte enfichable comporte une première partie, partie supérieure sur la figure et une deuxième partie inférieure sur la figure, délimitant les faces principales de la fente de réception 20. L'une des deux parties est rigide et l'autre est constituée au moins en partie par une languette souple ou semi-rigide. Si la languette souple ou semi-rigide ne constitue pas la totalité de cette partie, alors cette languette est située du côté d'introduction de la carte à puce.

Sur la figure 1, la plaque supérieure, désignée par la référence 30, est rigide. C'est elle qui contient les puces de circuit intégré et les connexions électriques vers le connecteur externe. Elle contient de préférence aussi le connecteur interne pour les contacts affleurants de la carte à puce. La languette souple fait partie de la plaque inférieure et est située du côté d'insertion de la carte à puce; elle est désignée par la référence 42. La largeur de la fente d'insertion 20, c'est-à-dire la distance séparant la plaque inférieure de la plaque supérieure est sensiblement égale à l'épaisseur d'une carte à puce à contacts affleurants; ordre de grandeur : 1 millimètre.

Comme certaines cartes à puces comportent des surépaisseurs, par exemple des inscriptions en relief du nom du titulaire et de divers numéros, on prévoit de préférence que la plaque supérieure rigide 30 comporte une rainure correspondante 32 qui permet à la carte d'entrer malgré ces surépaisseurs, tout en conservant une largeur de fente d'insertion étroitement adaptée à l'épaisseur de la carte.

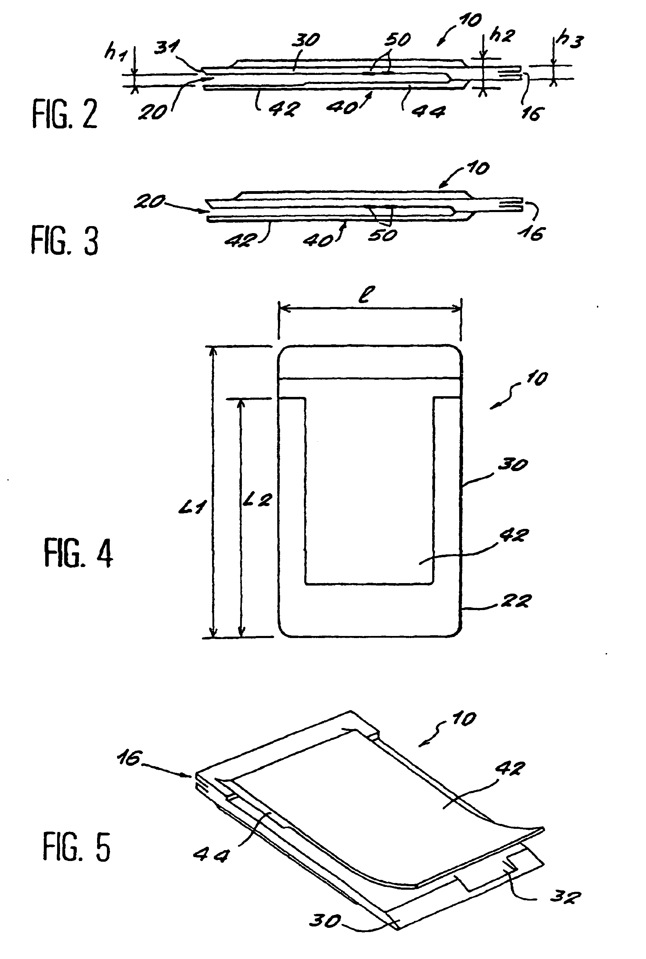

La figure 2 et la figure 3 représentent en coupe la carte enfichable 10, dans deux modes de réalisation différents.

Sur la figure 2, la plaque inférieure 40 est constituée de deux parties : la languette souple 42 du côté d'insertion de la carte à puce, et une partie rigide 44 du côté opposé, dans le prolongement de la languette souple. Le connecteur interne 50 pour contacts affleurants est situé dans la zone où la partie rigide 44 fait face à la plaque supérieure rigide 30. De préférence le connecteur interne 50 est porté par la plaque supérieure rigide 30, mais il pourrait aussi être porté par la plaque inférieure dans sa partie rigide 44. Le connecteur externe femelle 16 est visible sur la figure 2.

Le bord d'entrée 31 de la plaque supérieure 30 est de préférence biseauté pour faciliter l'insertion de la carte à puce, la souplesse de la languette facilitant également cette insertion. La rigidité de la plaque inférieure dans sa partie 44 assure fermement le maintien en contact électrique de la carte à puce avec le connecteur interne 50.

La figure 3 représente une autre réalisation dans laquelle l'ensemble de la plaque inférieure 40 est constitué par une languette semi-rigide fixée rigidement du côté du connecteur enfichable externe 16. L'élasticité de cette languette assure à la fois une insertion facile de la carte à puce, puisque l'insertion se fait du côté opposé au côté de fixation de la languette, et un maintien ferme des contacts de la carte à puce contre le connecteur interne qui est dans une zone assez proche de la zone de fixation de la languette.

La figure 4 représente une vue de dessous de la carte enfichable, avec la languette semi-rigide 42 de la figure 3, et une carte à puce 22 insérée dans la fente 20.

Comme on peut le voir sur cette figure, la largeur de la carte amovible selon l'invention est sensiblement la même que celle de la carte à puce. La fente délimitée par les deux plaques n'est pas délimitée latéralement. Les bords latéraux de la fente sont ouverts. Ainsi, le positionnement latéral de la carte à puce est réalisé par la fente de l'ordinateur et plus précisément par les bords latéraux 13 de cette fente (figure 1) dans laquelle est insérée la carte amovible.

Ainsi la carte amovible reste conforme aux dimensions hors-tout d'une carte répondant à la norme PCMCIA.

La figure 5 représente une vue en perspective, de dessous, de la même carte.

Sur cette figure, la languette a été recourbée de manière à illustrer la caractéristique de souplesse et à montrer la rainure 32.

En référence aux figures 2 et 4, des valeurs de dimensions sont données ci-après à titre indicatif et nullement restrictif :
h1 = 1 mm
h2 = 5 mm
h3 = 3,3 mm
L1 = 85 mm
l2 = 85 mm
l = 54 mm

## Revendications (Revendications pour l'(les) Etat(s) contractant(s) suivant(s): ES, IT)

1. Carte amovible à connecteur enfichable pour micro-ordinateur formant lecteur de carte à puce et comportant pour cela un connecteur adapté à venir en contact avec les contacts de la carte à puce pour relier électriquement la carte amovible et la carte à puce, la carte amovible comportant une première plaque (30) et une deuxième plaque (40) solidaires dans la partie située du côté du connecteur enfichable (16) **caractérisée en ce que** ces plaques sont sensiblement de même longueur et forment une fente d'insertion (20) de carte à puce à leur extrémité du côté opposé et **en ce que** sa largeur est sensiblement la même que celle de la carte à puce, et **en ce que** la fente n'est pas fermée sur ses bords latéraux de sorte que le positionnement latéral de la carte à puce est réalisé par la fente (12) de l'ordinateur dans lequel la carte amovible est insérée.

2. Carte amovible enfichable selon la revendication 1, **caractérisé en ce que** la première plaque est rigide et la deuxième est constituée au moins en partie par une languette (42) souple ou semi-rigide du côté d'insertion de la carte à puce.

3. Carte amovible enfichable selon la revendication 1 ou 2, **caractérisé en ce que** la languette constitue une partie seulement de la deuxième plaque, une autre partie (44), dans le prolongement de la languette, étant rigide.

4. Carte amovible selon l'une quelconque des revendications 1 à 3, **caractérisé en ce que** le connecteur interne (50) de la carte amovible est placé dans la fente (20) là où la première plaque (30) est en regard de la partie rigide (44) de la deuxième plaque.

5. Carte selon la revendication 3, **caractérisée en ce que** le connecteur interne (50) est placé sur la première plaque.

6. Carte amovible enfichable selon la revendication 1, **caractérisée en ce que** la languette constitue la totalité de la plaque inférieure de la carte, la languette étant semi-rigide (42).

7. Carte amovible selon l'une quelconque des revendications 1 à 6, **caractérisée en ce que** le bord d'entrée (31) de la première plaque (30) est biseauté pour faciliter l'insertion de la carte à puce.

## Revendications (Revendications pour l'(les) Etat(s) contractant(s) suivant(s): DE, GB)

**1.** Carte amovible à connecteur enfichable pour micro-ordinateur formant lecteur de carte à puce et comportant pour cela un connecteur adapté à venir en contact avec les contacts de la carte à puce pour relier électriquement la carte amovible et la carte à puce, la carte amovible comportant une première plaque (30) rigide et une deuxième plaque (40) ces plaques étant solidaires dans la partie située du côté du connecteur enfichable (16) **caractérisée en ce que** ces plaques sont sensiblement de même longueur, **en ce qu'**elles forment une fente d'insertion (20) de carte à puce du côté opposé, et **en ce que** la deuxième plaque est constituée au moins en partie par une languette (42) présentant une élasticité de manière à pouvoir être recourbée du côté d'insertion de la carte à puce.

**2.** Carte amovible enfichable selon la revendication 1, **caractérisée en ce que** la languette constitue une partie seulement de la deuxième plaque, une autre partie (44), dans le prolongement de la languette, étant rigide.

**3.** Carte amovible selon l'une quelconque des revendications 1 à 2, **caractérisée en ce que** le connecteur interne (50) de la carte amovible est placé dans la fente (20) là où la première plaque (30) est en regard de la partie rigide (44) de la deuxième plaque.

**4.** Carte selon la revendication 2, **caractérisée en ce que** le connecteur interne (50) est placé sur la première plaque.

**5.** Carte amovible enfichable selon la revendication 1, **caractérisée en ce que** la languette constitue la totalité de la plaque inférieure de la carte, la languette étant semi-rigide (42).

**6.** Carte amovible selon l'une quelconque des revendications 1 à 5, **caractérisée en ce que** sa largeur est sensiblement la même que celle de la carte à puce, et **en ce que** la fente n'est pas fermée sur ses bords latéraux de sorte que le positionnement latéral de la carte à puce est réalisé par la fente (12) de l'ordinateur dans lequel la carte amovible est insérée.

**7.** Carte amovible selon l'une quelconque des revendications 1 à 6, **caractérisée en ce que** le bord d'entrée (31) de la première plaque (30) est biseauté pour faciliter l'insertion de la carte à puce.

## Claims (Claims for the following Contracting State(s): ES, IT)

1. Removable card with a plug-in connector for a microcomputer forming a chip card reader and comprising for this purpose a connector adapted to come into contact with the contacts on the chip card in order to electrically connect the removable card and the chip card, the removable card including a first plate (30) and a second plate (40) solidly attached by the part located on the side of the plug-in connector (16), **characterised in that** these plates are substantially of the same length and **in that** they form an insertion slot (20) for the chip card at their end on the opposite side, and **in that** its width is substantially the same as that of the chip card, and **in that** the slot is not closed on its lateral edges so that the lateral positioning of the chip card is provided by the slot (12) of the computer in which the removable card is inserted.

2. Plug-in removable card according to claim 1, **characterised in that** the first plate is rigid and the second is made up, at least partially, of a flexible or semi-rigid tongue (42) on the insertion side of the chip card.

3. Plug-in removable card according to claim 1 or 2, **characterised in that** the tongue only constitutes a part of the second plate, the other part (44), which is an extension of the longue, being rigid.

4. Removable card according to any of the claims from 1 to 3, **characterised in that** the internal connector (50) of the removable card is placed in the slot (20) where the final plate (30) is parallel to the rigid part (44) of the second plate.

5. Card according to claim 3, **characterised in that** the internal connector (50) is placed on the first plate.

6. Plug-in removable card according to claim 1, **characterised in that** the tongue makes up the whole of the bottom plate of the card, the tongue being semi-rigid (42).

7. Removable card according to any one of the claims from 1 to 6, **characterised in that** the insertion edge (31) of the first plate (30) is bevelled so as to facilitate the insertion of the chip card.

## Claims (Claims for the following Contracting State(s): DE, GB)

**1.** Removable card with a plug-in connector for a microcomputer forming a chip card reader and comprising for this purpose a connector adapted to come into contact with the contacts on the chip card in order to electrically connect the removable card and the chip card, the removable card including a first rigid plate (30) and a second plate (40), these plates being solidly attached by the part located at the side of the plug-in connector (16), **characterised in that** these plates are substantially of the same length and **in that** they form an insertion slot (20) for the chip card at the opposite side, and **in that** the second plate is made up, at least partially, of a tongue with a degree of elasticity such that it can be curved at the insertion side of the chip card.

**2.** Plug-in removable card according to claim 1, **characterised in that** the tongue only constitutes a part of the second plate, the other part (44), which is an extension of the tongue, being rigid.

**3.** Removable card according to either of the clams 1 or 2, **characterised in that** the internal connector (50) of the removable card is placed in the slot (20) where the first plate (30) is parallel to the rigid part (44) of the second plate.

**4.** Card according to claim 2, **characterised in that** the internal connector (50) is placed on the first plate.

**5.** Plug-in removable card according to claim 1, **characterised in that** the tongue makes up the whole of the bottom plate of the card, the tongue being semi-rigid (42).

**6.** Removable card according to any one of the claims from 1 to 5, **characterised in that** its width is substantially the same as that of the chip card, and **In that** the slot is not closed on its lateral edges so that the lateral positioning of the chip card is provided by the slot (12) of the computer in which the removable card is inserted.

**7.** Removable card according to any one of the claims from 1 to 6, **characterised in that** the insertion edge (31) of the first plate (30) is bevelled so as to facilitate the insertion of the chip card.

## Patentansprüche (Patentansprüche für folgende(n) Vertragsstaat(en): ES, IT)

1. Auswechselbare Karte mit Steckverbinder für Mirkocomputer, welche ein Chipkartenlesegerät bildet und hierfür ein Verbindungsstück aufweist, das den Kotakt mit den Kontakten der Chipkarte herstellen kann, um die auswechselbare Karte und die Chipkarte elektrisch miteinander zu verbinden, wobei die auswechselbare Karte ein erstes Plättchen (30) und ein zweites Plättchen (40) umfasst, und diese Plättchen an dem Teil zur Seite des Steckverbinders (16) hin miteinander verbunden sind, **dadurch gekennzeichnet, dass** diese Plättchen deutlich die gleiche Länge haben und an der entgegen gesetzten Seite an ihrem Ende einen Einschubschlitz (20) für eine Chipkarte bilden, und dass sie deutlich genauso breit ist, wie die Chipkarte und dass der Schlitz an den seitlichen Rändern nicht geschlossen ist, so dass die Positionierung der Chipkarte an der Seite durch den Schlitz (12) des Computers erfolgt, in den die auswechselbare Karte einschoben wird.

2. Auswechselbare Steckkarte gemäß Patentanspruch 1, **dadurch gekennzeichnet, dass** das erste Plättchen steif ist und das zweite zumindest teilweise aus einer elastischen oder halbstarren Feder (42) auf der Seite des Chipkarteneinschubs besteht.

3. Auswechselbare Steckkarte gemäß Patentanspruch 1 oder 2, **dadurch gekennzeichnet, dass** die Feder nur einen Teil des zweiten Plättchens bildet, und der andere Teil (44) in der verlägerung der Feder starr ist.

4. Auswechselbare Karte gemäß einem der Ansprüche 1 bis 3, **dadurch gekennzeichnet, dass** sich das interne Verbindungsstück (50) der auswechselbaren Karte in Schlitz (20) befindet, dort wo das erste Plättchen (30) gegenüber dem starren Teil (44) des zweiten Plättchens steht.

5. Karte nach Anspruch 3, **dadurch gekennzeichnet, dass** sich das interne Verbindungsstück (50) auf dem ersten Plättchen befindet.

6. Auswechselbare Steckkarte nach Patentanspruch 1, **dadurch gekennzeichnet, dass** die Feder das gesamte untere Plättchen der Karte bildet und diese (42) halbstarr ist.

7. Auswechselbare Karte nach einem der Ansprüche 1 bis 6, **dadurch gekennzeichnet, dass** die Eingangskante (31) des ersten Plättchens (30) abgeschrägt ist, um das Einschieben der Chipkarte zu erleichtern.

## Patentansprüche (Patentansprüche für folgende(n) Vertragsstaat(en): DE, GB)

**1.** Auswechselbare Karte mit Steckverbinder für Mirkocomputer, welche ein Chipkartenlesegerät bildet und hierfür ein Verbindungsstück aufweist, das den Kotakt mit den Kontakten der Chipkarte herstellen kann, um die auswechselbare Karte und die Chipkarte elektrisch miteinander zu verbinden, wobei die auswechselbare Karte ein erstes steifes Plättchen (30) und ein zweites Plättchen (40) umfasst, und diese Plättchen an dem Teil zur Seite des Steckverbinders (16) hin miteinander verbunden sind, **dadurch gekennzeichnet, dass** diese Plättchen deutlich gleich lang sind und an derentgegen gesetzten Seite einen Einschubschlitz (20) für die Chipkarte bilden, **dadurch gekennzeichnet, dass** das zweite Plättchen zumindest zum Teil auf der Seite des Chipkarteneinschubs aus einer Feder (42) besteht, welche eine solche Elastizität aufweist, dass sie sich biegen kann.

**2.** Auswechselbare Steckkarte gemäß Patentanspruch 1, **dadurch gekennzeichnet, dass** die Feder nur einen Teil des zweiten Plättchens bildet, und der andere Teil (44) in der Verlängerung der Feder starr ist.

**3.** Auswechselbare Karte gemäß einem der Ansprüche 1 und 2, **dadurch gekennzeichnet, dass** sich das interne Verbindungsstück (50) der auswechselbaren Karte im Schlitz (20) befindet, dort wo das erste Plättchen (30) gegenüber dem starren Teil (44) des zweiten Plättchens steht.

**4.** Karte nach Anspruch 2, **dadurch gekennzeichnet, dass** sich das interne Verbindungsstück (50) auf dem ersten Plättchen befindet.

**5.** Auswechselbare Steckkarte nach Patentanspruch 1, **dadurch gekennzeichnet, dass** die Feder das gesamte untere Plättchen der Karte bildet und diese (42) halbstarr ist.

**6.** Auswechselbare Karte nach einem der Ansprüche 1 bis 5, **dadurch gekennzeichnet, dass** sie deutlich genauso breit ist, wie die Chipkarte und dass der Schlitz an den seitlichen Rändern nicht geschlossen ist, so dass die Positionierung der Chipkarte an der Seite durch den Schlitz (12) des Computers erfolgt, in den die auswechselbare Karte einschoben wird.

**7.** Auswechselbare Karte nach einem der Ansprüche 1 bis 6, **dadurch gekennzeichnet, dass** die Eingangskante (31) des ersten Plättchens (30) abgeschrägt ist, um das Einschieben der Chipkarte zu erleichtern.
